Europäisches Patentamt

European Patent Office

Office européen des brevets

(11) Veröffentlichungsnummer: **0 304 565 B1**

(12) **EUROPÄISCHE PATENTSCHRIFT**

(45) Veröffentlichungstag der Patentschrift: **14.10.92**

(21) Anmeldenummer: **88109233.2**

(22) Anmeldetag: **10.06.88**

(51) Int. Cl.⁵: **F16D 65/04**

(54) **Bremsklotz.**

(30) Priorität: **27.08.87 DE 3728641**
**25.11.87 DE 3739914**
**03.02.88 DE 3803069**

(43) Veröffentlichungstag der Anmeldung:
**01.03.89 Patentblatt 89/09**

(45) Bekanntmachung des Hinweises auf die
Patenterteilung:
**14.10.92 Patentblatt 92/42**

(84) Benannte Vertragsstaaten:
**DE ES FR GB IT**

(56) Entgegenhaltungen:
**DE-A- 2 513 131      DE-A- 2 602 798**
**DE-A- 3 125 902      DE-A- 3 415 994**
**DE-U- 8 426 713      DE-U- 8 527 259**

(73) Patentinhaber: **ALFRED TEVES GmbH**
**Guerickestrasse 7 Postfach 90 01 20**
**W-6000 Frankfurt am Main 90(DE)**

(72) Erfinder: **Weiler, Rolf**
**Zum Kohlwaldfeld 20**
**W-6239 Eppstein 2(DE)**
Erfinder: **Panek, Claus-Peter**
**Feldbergstrasse 41**
**W-6374 Steinbach(DE)**

Erfinder: **Bach, Uwe**
**Wiesbadener Strasse 36**
**W-6272 Niedernhausen(DE)**
Erfinder: **Ceylan, Ahmet Demir**
**Bethmannstrasse 15**
**W-6000 Frankfurt/Main(DE)**
Erfinder: **Weidenweber, Michael**
**Bischofsweg 53**
**W-6000 Frankfurt/Main 70(DE)**
Erfinder: **Sacher, Gerhard**
**August-Bebel-Strasse 15**
**W-6000 Frankfurt/Main 80(DE)**
Erfinder: **Stratthaus, Manfred**
**Hohemarkstrasse 65**
**W-6370 Oberursel 1(DE)**

(74) Vertreter: **Portwich, Peter**
**c/o ALFRED TEVES GMBH Guerickestrasse 7**
**W-6000 Frankfurt/Main 90(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen in einem Bremsschacht gehaltenen und geführten, mit einer Trägerplatte und einem Reibbelag versehenen Bremsklotz für eine Teilbelag-Scheibenbremse entsprechend dem Oberbegriff von Patentanspruch 1. Ein derartiger Bremsklotz ist aus DE-U-85 27 259 bekannt.

Bei der Führung von Bremsklötzen in Bremsbewegungsrichtung in dem zugehörigen Schacht der Bremse, können eine Reihe von Schwierigkeiten auftreten. Wird zum einen die Bremse sehr lange nicht betätigt, so können die Bremsklötze im Schacht korrodieren, so daß sie sich nur sehr schwer bewegen lassen. Eine derartige Korrosion kann nicht nur durch Oxydation, sondern auch durch elektrolytische Vorgänge ausgelöst werden, wenn die den Bremsbelag tragende Trägerplatte und der Schacht zur Führung des Bremsklotzes aus unterschiedlichen Metallen bestehen. Dies ist beispielsweise dann der Fall, wenn aus Gewichtsgründen der Bremssattel aus Aluminium gegossen wurde, während die in dem Schacht des Aluminiumsattels geführte Trägerplatte des Bremsklotzes aus Eisen besteht. Bremssattel aus Aluminium haben zwar den Vorteil eines sehr geringen Gewichtes. Gegenüber dem Material der Trägerplatte ist darüberhinaus aber auch der Aluminiumschacht verhältnismäßig weich, so daß trotz Behandlung der Schachtoberfläche der Schacht durch die Trägerplatte verhältnismäßig leicht verletzt werden kann, so daß sich auch hierdurch Schwierigkeiten bei der Führung der Trägerplatte im Schacht ergeben können.

Um den beschriebenen Schwierigkeiten abzuhelfen, wurden die Schachtflächen mit Schachtblechen ausgekleidet, welche in ihrer Oberflächenbehandlung, ihrer Festigkeit und ihrem Material im wesentlichen an die Trägerplatte der Bremsklötze angepaßt waren. Derartige Schachtbleche haben aber den Nachteil, daß sich zum einen wegen des zusätzlich notwendigen Bauteils die Toleranzen erhöhen, zum anderen aufgrund einer Korrosion zwischen Schachtwand und Schachtblech die Schachtabmessungen sich verändern können, so daß eine leichte und sichere Führung der Trägerplatte im Schacht nicht mehr gewährleistet ist. Hinzukommt, daß die zwischen Schachtwand und Schachtblech sich ansammelnden Korrosionsprodukte auch nicht selbsttätig entfernt werden können, weil keine Relativbewegung zwischen der Schachtwand und dem Blech stattfindet.

Im Zusammenhang mit der DE-A-26 02 798 ist es bekannt, zur Lärmdämpfung bei Bremsklötzen diese mit einem Abdeckblech zu versehen, in Verbindung mit zusätzlichen lärmdämmenden Schichten, die beim Bremsen unangenehme Quietschfrequenzen hinreichend bedämpfen. Um die Bleche auswechseln zu können, greifen diese elastisch um die Trägerplatte, so daß sie relativ leicht wieder gelöst werden können.

Weiterhin ist es aus dem DE-U-G 84 26 713 bekannt, daß derartige Abdeckbleche auch um die seitlichen Flächen des Bremsklotzes der Trägerplatte greifen können, um die geräuschdämpfenden Bleche fest auf der Trägerplatte zu halten.

Die vorliegende Erfindung hat sich, ausgehend vom Stand der Technik nach DE-U-85 27 259, zur Aufgabe gestellt, die Führung derartiger Bremsklötze im Bremsschacht zu verbessern, insbesondere auch für den Fall, daß der Bremsschacht aus einem anderen Metall besteht, als die Trägerplatten der Bremsklötze. Insbesondere soll die Führung der Bremsklötze für den Fall verbessert werden, daß die Führungsfläche des Sattels aus weicherem Material als die Seitenflächen der Belagträger sind.

Die Aufgabe wird durch die sich aus dem kennzeichnenden Teil des Hauptanspruches ergebende Merkmalskombination gelöst. Die Erfindung besteht im Prinzip also darin, die Führungsflächen der Trägerplatte im Schacht mit einer Metallauflage zu umgeben, so daß nunmehr die Bremsklötze auf der Metallauflage, nicht aber auf den Seitenflächen der Trägerplatte im Führungsschacht gleiten. Eine derartige Maßnahme bürgt eine Reihe von Vorteilen. Zum einen wird eine Korrosion zwischen dem Schacht und der Metallauflage leicht verhindert, da sich die Metallauflage in ihrer Materialqualität ohne Schwierigkeiten an den Schacht anpassen läßt, so daß eine Korrosion verhindert wird. Insbesondere aber sorgt die Metallauflage für eine verbreiterte Auflagefläche des Bremsklotzes in dem Schacht, so daß sich der Abrieb bei der Bremsbetätigung, insbesondere für den Fall herabsetzen läßt, daß die Schachtwände aus weichem Material (Aluminium) gebildet sind. Des weiteren ist eine mögliche Korrosion zwischen der Seitenwand der Trägerplatte und der ihr zugewandten Fläche der Metallauflage weniger gravierend, da die Bremsklötze in bestimmten Zeiträumen ausgewechselt werden, während hingegen für die bekannten Schachtbleche eine lange Lebensdauer gefordert werden muß. Des weiteren ist es verhältnismäßig preiswert, die Metallauflagen in geeigneter Weise zu bearbeiten und zu behandeln, da diese verhältnismäßig klein sind. Im Gegensatz zu den bekannten Abdeckblechen zur Lärmbekämpfung ist es nämlich durchaus nicht notwendig, daß sich die Metallauflage über die gesamte Breite der Trägerplatte erstreckt. Es genügt, daß sie auf den Führungsflächen an den Stirnseiten der Trägerplatte vorhanden ist und hinreichend fest auf der Trägerplatte verankert ist. Zweckmäßige Einzelheiten hierzu beschreibt die Fortbildung der Erfindung gemäß Anspruch 2, gemäß dem die Metallauflage zu beiden Seiten der Trägerplatte durch ein U-Profil gebildet sein kann, welches mit seinen beiden Schenkeln an der Vorder- und Rückfläche der Trägerplatte verankert ist.

Soweit die Trägerplatte mit Durchgangsöffnungen zur Führung des Bremsklotzes mittels Führungsstiften versehen ist, empfiehlt sich in Weiterbildung der Erfindung eine Ausgestaltung nach Anspruch 3, bei der die Durchgangsöffnungen gleichzeitig zur Verankerung der Metallauflage oder des U-förmigen Profils mit ausgenutzt werden.

Eine andere oder zusätzliche Möglichkeit der Verankerung der Metallauflage kann darin bestehen, das Schenkelende gemäß Anspruch 4 durch einen Prägevorgang in der Trägerplatte zu verankern.

Eine einfache Ausgestaltung des Bremsklotzes zeigt die Merkmalskombination nach Anspruch 6, bei der das Profil des Umfassungsteils der Kontur der Trägerplatte im Bereich der Führungsfläche unmittelbar folgt. Durch eine dichte Anlage der Metallauflage an der Stirnfläche der Trägerplatte wird eine Korrosion an den Grenzflächen erschwert. Darüber hinaus läßt sich durch Wahl der Dicke der Metallauflage auch die Auflagefläche auf der Schachtwand vergrößern, indem man die Metallauflage hinreichend dick wählt.

Eine andere Maßnahme zur Beseitigung der Korrosion und zur Verbesserung der Führung kann in einer Merkmalskombination nach Anspruch 7 bestehen, gemäß der die Stirnfläche der Trägerplatte gegenüber der Metallauflage federnd geführt ist. Da in diesem Falle die Metallauflage gegenüber der Stirnfläche in Höhe der Stoßstellen einen bestimmten Abstand besitzt, wird hier ein Raum zur Aufnahme von Korrosionsprodukten geschaffen, die durch die federnde Bewegung der Stirnflächen innerhalb der Metallauflage abgerieben werden. Da der im Querschnitt kreissektorförmige Freiraum nach unten und oben (radialer Richtung) geöffnet ist, können die Korrosionsprodukte auch den Bremsklotz verlassen.

Gemäß einer Ausgestaltung nach Anspruch 8 wird der freie Raum zusammengestaucht, so daß die federnde Bewegung der Stirnflächen der Trägerplatte innerhalb der Metallauflage behindert ist, andererseits aber auch in einfacher Weise sich eine vergrößerte Auflagefläche bilden läßt, welche die Flächenpreßung nahe des Schachtes durch Stirnfläche der Trägerplatte erheblich herabsetzt, wobei zusätzlich durch die Ausformung der formsteifen Stauchung eine leicht gerundete Auflauffläche gebildet werden kann, so daß die Stirnfläche wie auf Kufen in dem Schacht geführt ist.

Hinsichtlich der Befestigungsart des Umfassungsbauteils ergeben sich eine Reihe von günstigen Möglichkeiten, wie sie im Anspruch 11 geschildert sind.

Durch die Wahl des Merkmals nach Anspruch 12 läßt sich die Erzeugung von Korrosionsprodukten herabsetzen.

Eine Erhöhung der Befestigungskräfte läßt sich in Weiterbildung der Erfindung durch eine Merkmalskombination nach Anspruch 13 erreichen, indem zwei stirnseitige Umfassungsbauteile über einen mittleren Abschnitt einstückig miteinander verbunden sind, so daß in diesem Fall das entstehende Abdeckbauteil gleichzeitig zur Geräuschdämpfung mit ausgenutzt werden kann, soweit die Umfassungsbauteile den Bremsklotz nicht schon hinreichend bedämpfen.

Vielfach kann es sich empfehlen, die Vorteile der Metallauflage dadurch zu erreichen, daß diese unmittelbar an die Trägerplatte angegossen oder aus dieser herausgeformt wird. Dies ist insbesondere hinsichtlich einer breiteren Auflagefläche der Trägerplatte im Schacht erwünscht. Zum anderen lassen sich hierdurch Korrosionsprodukte zwischen Metallauflage und Stirnfläche der Trägerplatte mit Sicherheit ausschließen, da diese ja materialmäßig eine Einheit bilden. Die Auflagefläche des Bremsklotzes im Bremsschacht oder Belagträger kann auch in geeigneter Weise behandelt werden, etwa durch Beschichten mit Hartmetall oder Keramik.

Nachfolgend wird die Erfindung anhand von Ausführungsbeispielen in der Zeichnung erläutert. Es zeigen:

| Fig. 1 | ein aus zwei Umfassungsbauteilen gebildetes Abeckbauteil in Frontansicht, |
| --- | --- |
| Fig. 2 | das Abdeckbauteil nach Fig. 1 in Draufsicht, |
| Fig. 3 | das Abdeckbauteil nach Fig. 1 in Verbindung mit einem Bremsklotz in Frontansicht, |
| Fig. 4 | das Abdeckbauteil nach Fig. 1 an einem Bremsklotz in geschnittener Darstellung und Seitenansicht |
| Fig. 5 | das Abdeckbauteil nach Fig. 1 an einem Bremsklotz in Draufsicht, |
| Fig. 6 | ein zweites Ausführungsbeispiel der Erfindung in Form zweier Umfassungsbauteile, die an einem Bremsklotz befestigt sind, |
| Fig. 7 | die Reibbelagseite einer Trägerplatte des Bremsklotzes nach Fig. 6, ohne Reibbelag, |
| Fig. 8 | einen Teil der reibbelagfreien Seite der Trägerplatte, |
| Fig. 9 | einen Teilbereich der Trägerplatte in geschnittener Seitenansicht, |
| Fig. 10 | eine Draufsicht auf die Trägerplatte mit dem Umfassungsbauteil in Schnittdarstellung, |
| Fig. 11 | in Draufsicht ein drittes Ausführungsbeispiel des Umfassungsbauteils mit |

zwei Befestigungsformen an einem Bremsklotz,

Fig. 12    in Draufsicht ein viertes Ausführungsbeispiel eines Umfassungsbauteils auf einem Bremsklotz mit zwei Befestigungsarten,

Fig. 13    in Vorderansicht und teilweise geschnittener Darstellung ein fünftes Ausführungsbeispiel der Erfindung,

Fig. 14    in Draufsicht das Ausführungsbeispiel nach Fig. 13,

Fig. 15    eine Teilbelagscheibenbremse, in deren Schacht ein erfindungsgemäßer Bremsklotz geführt ist.

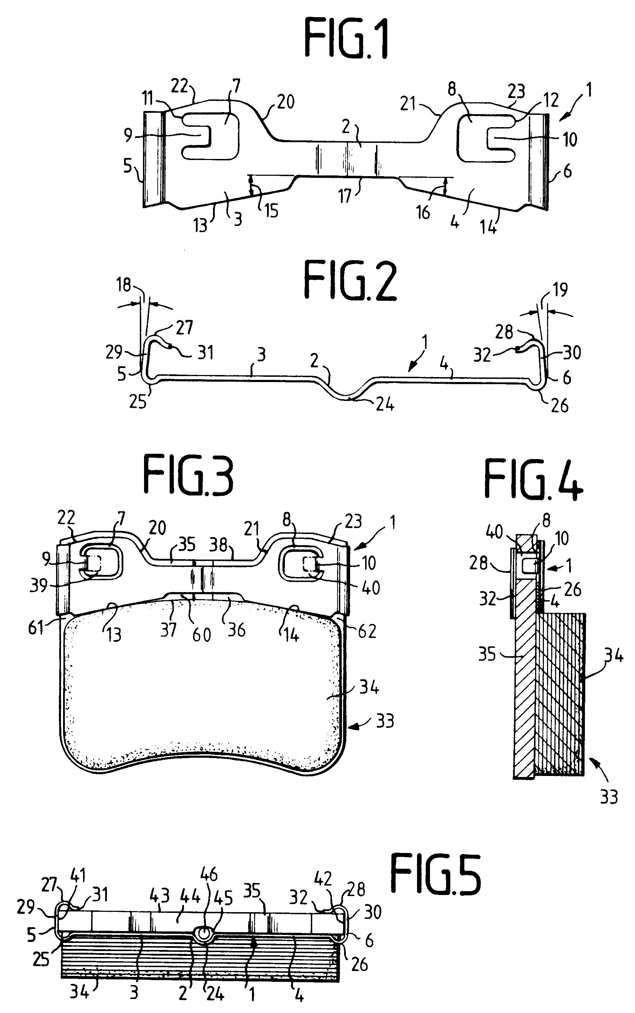

Fig. 1 zeigt ein Abdeckbauteil 1 mit einem mittleren Abschnitt 2 und zwei ersten seitlichen Abschnitten 3,4, im folgenden Flügel genannt. An den Flügeln 3,4 sind dem mittleren Abschnitt 2 zweite seitliche Abschnitte 5,6 gegenüberliegend angeordnet. Die Flügel 3,4 weisen Fenster 7,8 auf. In jedes der beiden Fenster 7,8 ragt eine Lasche 9,10. Die Laschen 9,10 sind an den Fensterseiten 11,12 angeordnet, die den seitlichen Abschnitten 5,6 zugewandt sind. Die Flügel 3,4 verjüngen sich zum mittleren Abschnitt 2 hin bzw. verbreitern sich in Richtung der seitlichen Abschnitte 5,6. Der mittlere Abschnitt 2 weist in etwa eine Rechteckform auf. Untere Kanten 13,14 der Flügel 3,4 verlaufen unter einem Winkel 15,16 zur unteren Kante 17 des mittleren Abschnitts 2. Obere Kanten 20,21,22,23 weisen eine S-förmige Kante 20,21 und eine zur unteren Kante 13,14 etwa parallele Kante 22,23 auf.

Fig. 2 zeigt das Abdeckbauteil 1 in Draufsicht. Im Bereich des mittleren Abschnittes 2 ist eine halbkreisförmige Brücke 24 angeordnet. An dem mittleren Abschnitt 2 schließen sich nahtlos die Flügel 3,4 an, die in Flucht zueinander stehen. Die seitlichen Abschnitte 5,6 weisen halbkreisförmige Vorsprünge 25 bis 28, Seitenwände 29,30 und Endabschnitte 31,32 auf. Die Seitenwände 29,30, die die Basisbereiche bilden, stehen etwa senkrecht unter Winkel 18,19 von 5° nach innen geneigt. Der Winkel dient dazu, daß das Abdeckbauteil 1 mit Vorspannung auf einer Belagträgerplatte aufsetzbar ist. Ausgehend von der Brücke 24 des mittleren Abschnittes 2 schließen sich übergangslos die Flügel 3,4 an. Es folgen die halbkreisförmigen Vorsprünge 25,26, die in die Seitenwände 29,30 übergehen. An den Seitenwänden 29,30 schließen sich die halbkreisförmigen Vorsprünge 27, 28 und an diese die Endabschnitte 31,32 an.

Fig. 3 zeigt einen Bremsklotz 33 mit einem Reibbelag 34, der auf einer Trägerplatte 35 angeordnet ist. In einem oberen reibbelagfreien Abschnitt 36 der Trägerplatte 35 ist das Abdeckbauteil 1 angeordnet. Die Kanten 13,14 des Abdeckbauteiles 1 passen sich einer abgerundeten Kante 37 des Reibbelages 34 an. Die S-förmigen Kanten 20,21 und die parallelen Kanten 22,23 des Abdeckbauteiles 1 passen sich dem Verlauf einer Kante 38 der Trägerplatte 35 an. Die Trägerplatte 35 weist Durchgangsöffnungen 39,40 auf, im folgenden Fenster genannt, die eine geringere Größe als die Fenster 7,8 des Abdeckbauteiles 1 aufweisen, aber kongruent zu diesen Fenstern 7,8 sind. Die Fenster 7,8 des Abdeckbauteiles 1 und die Fenster 39,40 der Trägerplatte 35 sind bei auf der Trägerplatte 35 aufgesetztem Abdeckbauteil 1 etwa zur Deckung gebracht.

Fig. 4 zeigt in Schnittdarstellung den Bremsbelag 33 mit dem Reibbelag 34 und Trägerplatte 35 und darauf aufgesetzt das Abdeckbauteil 1. Die Lasche 10 ist in das Fenster 40 abgebogen. Beide abgebogenen Laschen 9,10 des Abdeckbauteiles 1 verklemmen in den Fenstern 39,40 der Trägerplatte 35 und halten das Abdeckbauteil 1 rutschfest auf der Trägerplatte 35. Dies dient als Sicherung gegen Lösen des Abdeckbauteiles vom Belag.

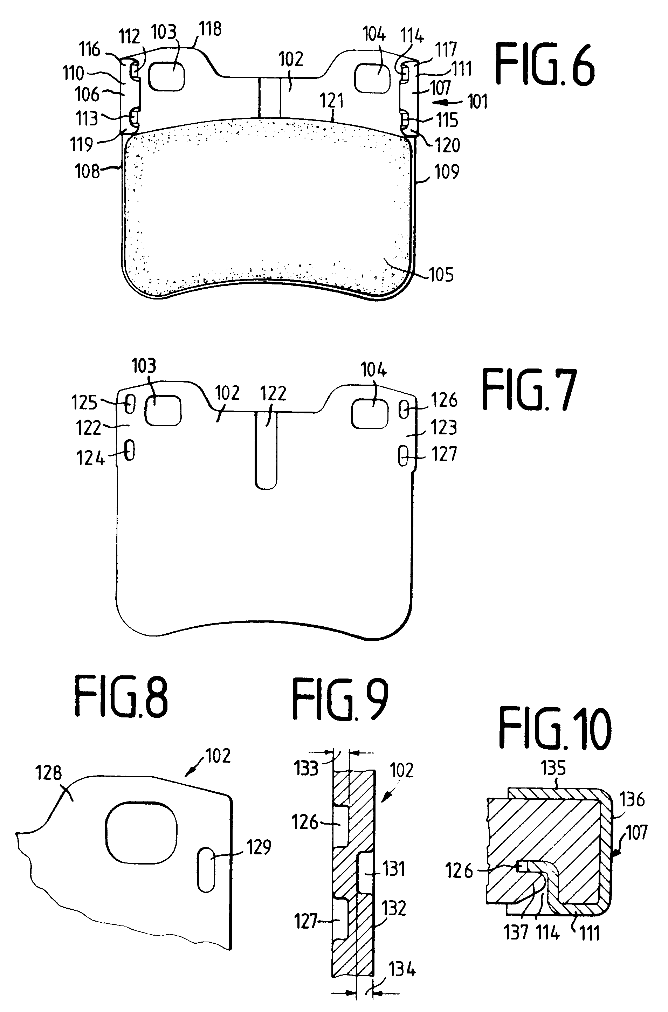

Fig. 5 zeigt die Trägerplatte 35 mit dem Abdeckbauteil 1 in Draufsicht. Die seitlichen Abschnitte 5,6 des Abdeckbauteiles 1 umgreifen mit ihren halbkreisförmigen Abschnitten 25 bis 28 federnd die Trägerplatte 35. Dabei liegen die Seitenwände 29,30 der Abdeckplatte 1 parallel an Seitenwänden 41,42 der Trägerplatte 35 an. Die Seitenwände 41,42 der Trägerplatte 35 stehen etwa senkrecht auf der Drehrichtung der Bremsscheibe, sind also scheibenein- und scheibenauslaufseitig angeordnet. Die Endabschnitte 31,32 stützen sich an der Rückseite 43 der Trägerplatte 35 ab. Die Trägerplatte 35 weist in ihrem mittleren Abschnitt 44 eine Ausnehmung 45 auf. Zusammen mit der Brücke 24 des Abdeckbauteiles 1 bildet die Ausnehmung 45 eine etwa kreisförmige Öffnung, die zur Aufnahme einer elektrischen Leitung 46 dient. Die elektrische Leitung 46 dient zur Anzeige einer Belagabnutzung. Weiterhin hat das Abdeckbauteil die Möglichkeit, sich bei einem Aufpressen auf die Trägerplatte 35 im Bereich der Brücke 24 dort als Toleranzausgleich zu verformen.

Fig. 6 zeigt einen Bremsbelag 101 mit einer Trägerplatte 102, die Öffnungen 103, 104 aufweist, einen Reibbelag 105 und zwei Umfassungsbauteilen 106, 107, die einen oberen Teil einer Seitenfläche 108, 109 umgeben. Die Umfassungsbauteile 106, 107 weisen auf rechteckförmigen Vorderseiten 110, 111 (erster Endbereich) Ausbuchtungen 112 bis 115 auf, die nach innen in die Trägerplatte hineinragen. Die Bauteile 106, 107 schließen mit ihren oberen Enden 116, 117 mit der Kante 118 der Trägerplatte 2 ab oder sind etwas unterhalb dieser Kante angeordnet. Die unteren Enden 119, 120 stützen sich auf der Oberfläche 121 des Reibbelages 105 ab.

Fig. 7 zeigt die Trägerplatte 102 mit den Öffnungen 103, 104 und einer Längsnut 122 zur Aufnahme eines leitfähigen Kabels, das zur Anzeige einer Reibbelagabnutzung dient. Auf der Frontseite der Trägerplatte 102 sind in oberen seitlichen Bereichen 122, 123 vier wannenartige Vertiefungen 124 bis 127 angeordnet.

Fig. 8 zeigt einen oberen seitlichen Bereich 128 von der Rückseite der Trägerplatte 102, der eine wannenförmige Vertiefung 129 für das Abdeckbauteil 107 aufweist.

Fig. 9 zeigt den seitlichen oberen Bereich 122 der Trägerplatte 102 in geschnittener Darstellung. Die wannenförmigen Vertiefungen 126,127 auf der Frontseite 130 und die wannenförmige Vertiefung 131 auf der Rückseite 132 der Trägerplatte 102 sind versetzt angeordnet. Die Vertiefungen 126 und 127 weisen eine Tiefe 133, die Vertiefung 131 eine Tiefe 134 auf.

Fig. 10 zeigt in Draufsicht in geschnittener Darstellung die Trägerplatte 102 mit dem Abdeckbauteil 107. Das Bauteil 107 weist die Vorderseite (erster Endbereich) 111, eine Rückseite 135 und einen seitlichen Bereich 136 auf. Die Ausbuchtung 114 des Abdeckbauteiles 107 ragt in die Vertiefung 126 der Trägerplatte 102. Nach einem Aufsetzen des Umfassungsbauteiles 107 auf die Rückenplatte 102 wird mit einem Stempel seitwärts der Trägerplatte 102 Material 137 über die Ausbuchtung 114 in die Vertiefungen 126, im folgenden Ausnehmung genannt, geschert. Auf diese Art und Weise entsteht ein sehr sicherer Formschluß, der das nicht rostende Bauteil 106,107, im folgenden Blech genannt, sich nicht mehr lockern läßt. Vorteilhaft werden sehr kostengünstige, nicht rostende Teile (Nirostablech) verwendet, für die sehr geringe Werkzeugkosten anfallen, und gleichzeitig erhalten die nicht rostenden Teile einen absolut festen Sitz auf der Trägerplatte 102, im folgenden Belagrückenplatte genannt. Indem die beiden sehr einfachen Umfassungsbauteile 107 in Ausnehmungen 124 bis 127 der Belagrückenplatte 102 eingeschert werden, wird ein Lockerungsvorgang nicht mehr möglich sein. Die Ausnehmungen 124 bis 127 der Belagrückenplatte 102 werden spanlos geformt, d.h. geprägt.

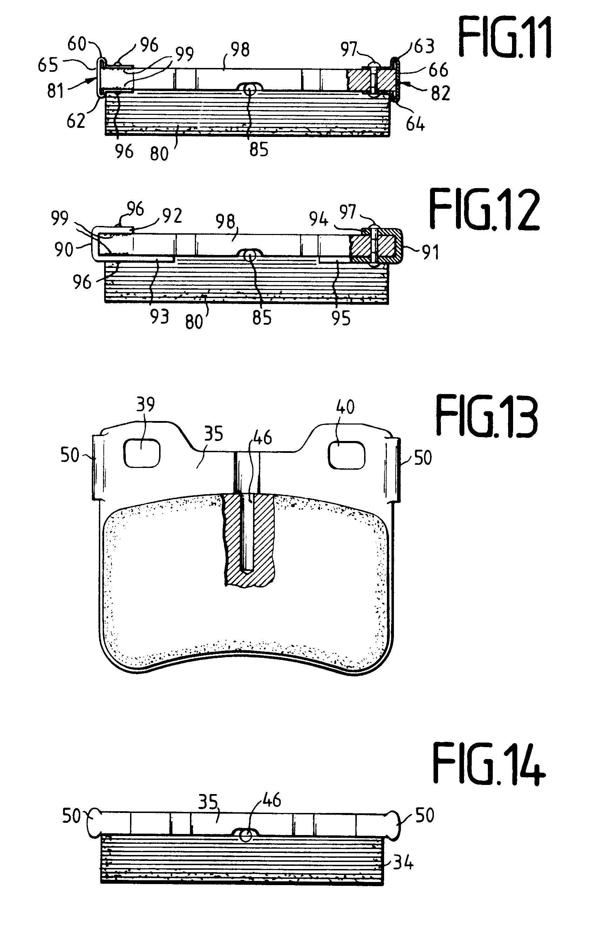

Fig. 11 und Fig. 12 zeigen ein drittes und viertes Ausführungsbeispiel der Erfindung in Form einer Draufsicht auf einen Bremsklotz, bei dem an einer Trägerplatte 98 ein Bremsbelag 80 gehalten ist. An den beiden Seiten der Trägerplatte 98 sind Umfassungsbauteile 81,82 bzw. 90,91 vorgesehen, die an der Trägerplatte befestigt sind. Dabei kann die Befestigung des Umfassungsbauteils durch Kerbnägel 96, die in Fig. 11 und 12 auf der linken Seite der Trägerplatte 98 oder aber auch durch Nieten 97, wie in Fig. 11 und 12 auf der rechten Seite der Trägerplatte 98 vorgenommen werden.

Die Ausgestaltung nach Fig. 11 weist eine gewisse Verwandtschaft zu der Ausgestaltung nach den Fig. 1 bis 5 auf. Zur Erzielung einer breiteren Auflagefläche, Vermeidungen der Reibbewegung zwischen der Trägerplatte und dem Umfassungsbauteil 81,82 wurden aber die Stoßstellen 60,62,63 und 64 gestaucht, wodurch das Umfassungsbauteil auch eine größere Festigkeit und eine verbesserte Anlage an der Trägerplatte erhält. Die Rundungen an den Stauchungsstellen 60,62,63 und 64 sorgen für eine gute Führung bei Unebenheiten innerhalb des Schachtes. Die Umfassungsbauteile können, wie durch die Schweißstelle 99 angedeutet, an der Trägerplatte 98 angeschweißt sein. Bei dem Stauchungsvorgang läßt sich auch relativ einfach erreichen, daß die Basisteile 65,66 in Fig. 1 zueinander parallel und damit im Schacht gut führbar sind.

Das Ausführungsbeispiel nach Fig. 12 entspricht in seiner Gestaltung mehr dem Ausführungsbeispiel nach den Fig. 6 bis 10, indem das Umfassungsbauteil 90 bzw. 91 der Kontur an den Seiten der Trägerplatte folgt. Das verwendete Blech, welches beispielsweise aus Nirosta sein kann, hat eine relativ große, über 1 mm liegende Stärke. Die Endbereiche 93,95 an der den Bremsbelag 80 tragenden Vorderseite der Trägerplatte 98 sind länger als die Endbereiche 92,94 auf der gegenüberliegenden Rückseite der Trägerplatte gewählt. Die Öffnungen 85 in dem Bremsbelag 80 der Fig. 11 und 12 dienen zur Aufnahme eines elektrischen Sensors. Die Wahl eines starken Bleches für die Umfassungsbauteile 90,91 bzw. die Anwendung der Sicken 60,62,63,64 in den Umfassungsbauteilen 80 und 81, tragen gegenüber dem Ausführungsbeispiel nach den Fig. 1 bis 5 zur Verkleinerung der biegebeanspruchten Radien bei. Die Befestigung der Umfassungsbauteile an der Trägerplatte ist allerdings nur schwer lösbar. Soweit die Bremsklötze in hinreichendem Zeitabstand ausgewechselt werden, entsteht hierdurch kein Nachteil. Als Werkstoff läßt sich außer Stahlblech auch eloxiertes Aluminium verwenden, falls die Trägerplatte in einem Aluminiumgehäuse eingesetzt wird.

Eine fünfte Ausführungsform der Erfindung beschreiben die Fig. 13 und 14, die in teilweise gebrochener Darstellung einen Bremsklotz in Vorderansicht (Fig. 13) und in Draufsicht (Fig. 14) abbilden. Bei diesem Ausführungsbeispiel ist die Trägerplatte 35 an ihren Seiten gestaucht, so daß die Umfassungsbauteile durch die Stauchungsstellen 50 gebildet sind. Die Stauchungsstellen müssen so ausgestaltet sein, daß die Auflagefläche auf den Schachtwänden möglichst groß ist, für den Fall, daß diese Schachtwände aus einem weichen Material gebildet sind (Aluminium). Durch eine geeignete Behandlung während des Stauchungsvorganges läßt sich unschwer erreichen, daß die Auflagefläche der Trägerplatte im Schacht zueinander plan sind und an ihren Kanten in Rundungen auslaufen, wodurch Reibungsverluste bei der Bewegung der Trägerplatte 35 in der Schachtwand vermieden werden. Zusätzlich empfiehlt es sich noch, die Oberfläche der Schachtwände zu behandeln, beispielsweise durch Beschichtung mit Hartmetall oder Anbringen einer Keramiklaufbahn.

Die in den Fig. 13 und 14 gezeigte Bohrung 46 dient wiederum zur Aufnahme eines elektrischen Sensors, während durch die Durchgangslöcher 39 und 40 die Führungsbolzen zur Führung der Trägerplatte 35 ragen.

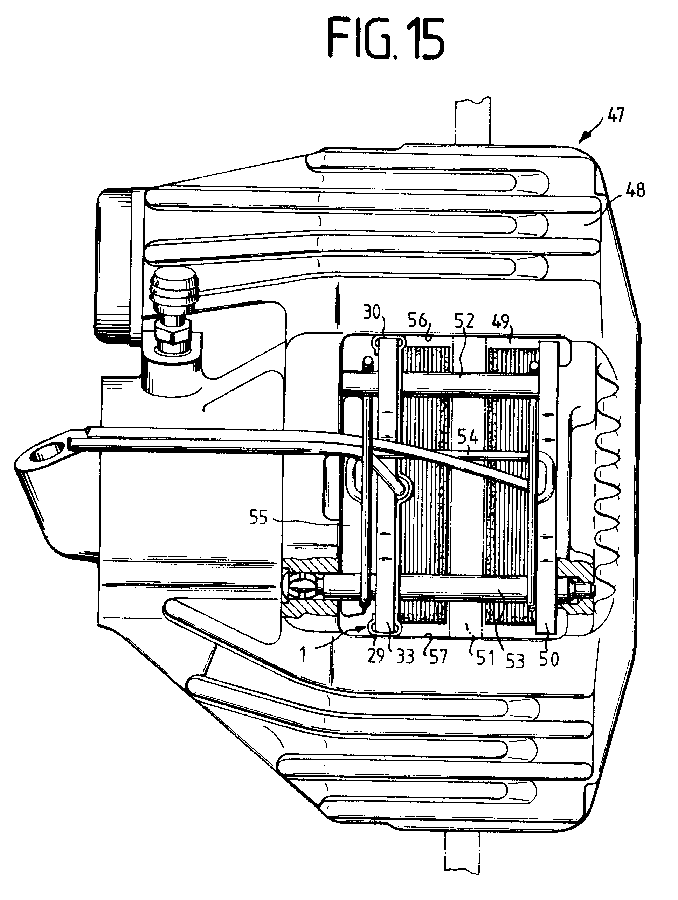

Fig. 15 zeigt eine Teilbelag-Scheibenbremse 47 mit einem aus Aluminium gegossenen Faustsattel 48 in Draufsicht. In einem Schacht 49 des Sattels 48 sind die Bremsbeläge 33 und 50 angeordnet. Zwischen den Bremsbelägen 33,50 rotiert eine Bremsscheibe 51. Die Bremsbeläge 33,50 werden von Stiften 52,53 in dem Schacht 49 gehalten und von einer Feder 54 geräuschmindernd auf die Stifte 52,53 gedrückt. Die Stifte 52,53 führen durch die Fenster 7,8 des Abdeckbauteiles 1 und der Fenster 39,40 der Trägerplatten 35. Bei einem Bremsvorgang fährt ein Kolben 55 einer Kolbenzylindereinheit 55 gegen den Bremsbelag 33 und drückt diesen gegen die Bremsscheibe 51. Mit Hilfe einer Reaktionskraft wird der Bremsbelag 50 über den Sattel 48 von der anderen Seite her gegen die Bremsscheibe 51 gezogen. Bei Bremsvorgängen tritt ein Belagverschleiß auf, so daß die Trägerplatte 35 des Bremsbelages 33 mit dem Abdeckbauteil 1, im folgenden Belag-Gleitblech genannt, entlang der Schachtwände 56,57 bewegt wird. Das Belag-Gleitblech 1 ist vorteilhaft ein Edelstahl- oder Nirostablech und verhindert dauerhaft mit seinen Seitenwänden 29,30, die zwischen der Trägerplatte 35 und den Schachtwänden 56,57 angeordnet sind, eine Korrosion, ein Festsetzen oder ein Festrosten zwischen Trägerplatte 35 des Bremsbelages 33 und den Schachtwänden 56,57. Das Belag-Gleitblech 1 ist nicht an der Trägerplatte 35 des Bremsbelages 50 vorgesehen, weil der Bremsbelag 50 keine Relativbewegung zu den Schachtwänden 56,57 durchführt. Die Endabschnitte 31,32 sind vorteilhaft auf der Rückseite 43, also der reibbelagfreien Seite der Trägerplatte 35 angeordnet, weil somit der mittlere Abschnitt 2 und die Flügel 3,4 des Belag-Gleitbleches 1 und die Kolbenzylindereinheit der Teilbelag-Scheibenbremse einander nicht hinderlich sind. Die halbkreisförmigen Vorsprünge 25 - 28 verbessern die Gleiteigenschaften des Bremsbelages im Schacht.

Eventuelle Korrosionsprodukte zwischen Belag-Gleitblech 1 und Belagträger 35 sind leicht entfernbar, und führen äußerstenfalls zum Austausch der Beläge 33,50. Dies bewirkt einen ggf. wesentlich geringeren Reparaturaufwand.

Das Belag-Gleitblech 1 kann sowohl auf dem faustseitigen als auch auf dem kolbenseitigen Belag 33,50 montiert werden. Im gezeigten Fall wird jedoch nur der kolbenseitige Belag mit einem Belag-Gleitblech bestückt. Der faustseitige Belag 50 ist um die doppelte Blechstärke breiter ausgeführt.

Die Montage des Bleches 1 auf den Bremsbelag 33 erfolgt vorteilhafterweise so, daß die Fenster 7,8 und 39,40 dann übereinanderliegen, wenn erstens die Unterkanten 13,14 des Bleches 1 auf die Oberkante 37 des Reibbelages 34 zur Anlage kommen oder zweitens die Kanten 22,23 des Bleches 1 mit der Kante 38 des Bremsbelages 33 abschließen.

Das Belaggleitblech 1 weist im Bereich der Brücke 24 und der Vorsprünge 25,26 Ausnehmungen 60,61 und 62 auf, so daß bei vollständiger Reibbelagabnutzung, die Brücke 24 und die Vorsprünge 25,26 nicht mit der Bremsscheibe 52 kollidieren.

**Patentansprüche**

1. In einem Bremsschacht gehaltener und geführter, mit einer Trägerplatte (35) und einem Reibbelag (34) versehener Bremsklotz für eine Teilbelagscheibenbremse, bei welchem über den die Reibkraft der Bremse auf die Schachtwand des Gehäuses übertragenden Seitenflächen (41,42) der Trägerplatte (35) eine Metallauflage angeordnet ist, die um die Seitenwände der Trägerplatte (35) greift und mit dieser verbunden ist, dadurch **gekennzeichnet,** daß die Metallauflage (29,30, Fig. 2) im Bereich der Seitenflächen (41,42) der Trägerplatte (35) derart ausgeformt ist, daß sich eine über die doppelte Materialstärke der Metallauflage hinausgehende Verbreiterung der Auflagefläche der Metallauflage auf den Seitenflächen der Schachtwand in zur Bremsfläche normaler Richtung ergibt.

2. Bremsklotz nach Anspruch 1, dadurch **gekennzeichnet,** daß die Metallauflage durch den Basisbereich (29,30, Fig. 2,5; 136 Fig. 10) eines einem wesentlichen U-förmiges Profil (25,29,27, Fig.2; 135,136,111 Fig. 10) aufweisenden Umfassungsbauteils (3,25,27,29,31 Fig. 2) gebildet ist, welches den die Reibbremskraft in das Bremsgehäuse (48, Fig. 6) übertragenden Bereich (41,42 Fig. 5) der Trägerplatte (35,102) umgreift, wobei der Basisbereich (30,136) in einen die Schenkel des U-Profils bildenden ersten und zweiten Endbereich (25,27 Fig. 2 bzw. 111 und 135 Fig. 10) des Umfassungsbauteils mündet, welche an der belagseitigen Vorderseite bzw. kolbenseitigen Rückseite (43, Fig. 5; 132 Fig. 9) der Trägerplatte (35, Fig. 4 und Fig. 5; 102 Fig. 9) verankert sind.

3. Bremsklotz nach einem der Ansprüche 1 oder 2, dadurch **gekennzeichnet,** daß das Umfassungsbauteil an einem seiner Endbereiche (3,4 Fig. 1 und Fig. 2) ein Fenster (7,8) aufweist, welches mit einer zur Aufnahme eines Führungsstiftes vorgesehenen Durchgangsöffnung (39,40 Fig. 3, Fig. 4) in der Trägerplatte (35) fluchtet und daß zur Verankerung des Umfassungsbauteils (1) eine in das Fenster ragende Lasche (9,10) durch die Durchgangsöffnung (39,40) in der Trägerplatte (35) greift (Fig.1 bis Fig. 4).

4. Bremsklotz nach einem der Ansprüche 1 oder 3, dadurch **gekennzeichnet,** daß die Trägerplatte (102) zumindest eine wannenförmige Vertiefung (124 bis 127) aufweist, in die eine von einem Endbereich (111) des Umfassungsbauteils (111,135,136) ausgehende Lasche oder Ausbuchtung (112 bis 115) hineinragt (Fig. 6 bis Fig.10).

5. Bremsklotz nach Anspruch 4, dadurch **gekennzeichnet,** daß die wannenförmige Vertiefung (124 bis 127) spanlos vorzugsweise durch Prägen geformt ist (Fig. 10).

6. Bremsklotz nach einem der Ansprüche 1 bis 5, dadurch **gekennzeichnet,** daß er über die Metallauflage an seinen Seitenflächen an den Wänden eines Sattelschachtes (49) eines vorzugsweise aus Aluminium bestehenden Sattels (48) abgestützt ist.

7. Bremsklotz nach einem der Ansprüche 1 bis 6, dadurch **gekennzeichnet,** daß die Stoßstelle (25 bis 28) zwischen dem Basisbereich (29 bzw. 30) und den angrenzenden Endbereichen (31,3 bzw. 4, 32) des Umfassungsteils eine kreissektorförmige Kontur besitzt, so daß die Seitenfläche (41,42) der Trägerplatte gegenüber dem Basisbereich (29,30) des Umfassungsteils um eine gewisse Strecke federnd verschiebbar ist (Fig. 1 bis Fig.5).

8. Bremsklotz nach einem der Ansprüche 1 bis 6, dadurch **gekennzeichnet,** daß die Stoßstelle zwischen den Endbereichen und dem Basisbereich einen formsteifen Stauchungsansatz (60,62 bzw.63,64) besitzt, der im wesentlichen mit dem Basisbereich (65,66) des Umfassungsteils fluchtet (Fig. 11).

9. Bremsklotz nach einem der Ansprüche 1 bis 8, dadurch **gekennzeichnet,** daß an einem der Endbereiche (25,27 bzw. 26,28) des Umfassungsbauteils zumindest ein Endteil (31 bzw. 32) vorgesehen ist, welches sich in Richtung zur Trägerplatte (35) erstreckend an dieser federnd abstützt (Fig. 5).

10. Bremsklotz nach Anspruch 6 und einem weiteren der vorangegangenen Ansprüche, dadurch **gekennzeichnet,** daß das Umfassungsbauteil (90,91) aus einem über 1 mm starken Blech geformt ist (Fig. 12).

11. Bremsklotz nach einem der Ansprüche 1 bis 10, dadurch **gekennzeichnet,** daß die Endbereiche (92,93 bzw. 94,95) des Umfassungsbauteils (90,92,93,96) durch eine (n) die Trägerplatte (98) durchdringende Niete (97) bzw. Kerbnagel (96) oder durch Schweißen (99) mit dieser verankert sind (Fig. 11,12).

12. Bremsklotz nach einem der Ansprüche 1 bis 11, dadurch **gekennzeichnet,** daß das Umfassungsbauteil aus Nirosta-Blech oder aus eloxiertem Alublech gebildet ist.

13. Bremsklotz nach einem der Ansprüche 1 bis 12, dadurch **gekennzeichnet,** daß an jeder der Seitenflächen (41,42) der Trägerplatte (35) ein Umfassungsbauteil vorgesehen ist und daß zwei einander entsprechende Endbereiche (3,4) der Umfassungsbauteile durch einen sich über die Länge der Seiten der Trägerplatte (35) erstreckenden mittleren Abschnitt (2) einstückig zu einem Abdeckbauteil (Fig. 1, Fig. 2) miteinander verbunden sind (Fig. 1 bis Fig. 5).

14. Bremsklotz nach einem der Ansprüche 1 bis 13, dadurch **gekennzeichnet,** daß die Metallauflage (50) einstückig aus der Trägerplatte (35) durch spanlose Verformung vorzugsweise durch Stauchen, Gießen oder Schweißen herausgebildet ist, um so eine geeignete Auflagefläche an der Schachtwand zu erhalten (Fig. 13, Fig. 14).

15. Bremsklotz nach einem der Ansprüche 1 bis 14, dadurch **gekennzeichnet,** daß die Auflagefläche des Bremsklotzes im Bremsschacht mit Hartmetall oder Keramik beschichtet ist.

**Claims**

1. A brake shoe for a spot-type disc brake which is held and guided in a brake aperture and is provided with a carrier plate (35) and a friction lining (34), wherein a metal coating is arranged on top of the lateral surfaces (41, 42) of the carrier plate (35) transmitting the friction force of the brake onto the aperture wall of the housing, the said metal coating embracing the lateral walls of the carrier plate (35) and being connected with the latter, **characterised** in that the metal coating (29, 30, Figure 2) in the area of the lateral surfaces (41, 42) of the carrier plate (35) is shaped such that there results an expansion of the abutment surface of the metal coating on the lateral surfaces of the aperture wall in the direction normal to the braking surface, which expansion is in excess of twice the material strength of the metal coating.

2. A brake shoe as claimed in claim 1, **characterised** in that the metal coating is formed by the base area (29, 30 - Figures 2, 5; 136 - Figure 10) of an enclosing component part (3, 25, 27, 29, 31 - Figure 2) having a substantially U-shaped profile (25, 29, 27 - Figure 2; 135, 136, 111 - Figure 10) and embracing the area (41, 42 - Figure 5) of the carrier plate (35, 102) which transmits the frictional brake force into the brake housing (48 - Figure 6), the said base area (30, 136) terminating into a first and second end area (25, 27 - Figure 2 and, respectively, 111 and 135 - Figure 10) of the enclosing component part, said end area forming the legs of the U-profile which are anchored on the pad-side front surface and, respectively, piston-side back surface (43 - Figure 5; 132 - Figure 9) of the carrier plate (35 - Figure 4 and Figure 5; 102 - Figure 9).

3. A brake shoe as claimed in any one of the claims 1 or 2, **characterised** in that the enclosing component part at one of its end areas (3, 4 - Figure 1 and Figure 2) comprises a window (7, 8) which is in alignment with a through-hole (39, 40 - Figure 3, Figure 4) in the carrier plate (35) provided to accommodate a guide pin, and in that to anchor the enclosing component part (1) a lug (9, 10) projecting into the window penetrates the through-hole (39, 40) in the carrier plate (35) (Figures 1 to 4).

4. A brake shoe as claimed in any one of the claims 1 or 3, **characterised** in that the carrier plate (102) includes at least one trough-shaped indentation (124 to 127) projecting into which is a lug or bulged-out portion (112 to 115) which extends from an end area (111) of the enclosing component part (111, 135, 136) (Figure 6 to Figure 10).

5. A brake shoe as claimed in claim 4, **characterised** in that the trough-shaped indentation (124 to 127) is made by chipless forming, preferably by embossing (Figure 10).

6. A brake shoe as claimed in any one of the claims 1 to 5, **characterised** in that it is supported through the metal coating on its lateral surfaces on the walls of a caliper aperture (49) of a caliper (48) which, preferably, is made of aluminum.

7. A brake shoe as claimed in any one of the claims 1 to 6, **characterised** in that the junction point (25 to 28) between the base area (29 and 30, respectively) and the adjoining end aras (31, 3 and 4, 32, respectively) of the enclosing component part has a circle-sector-shaped contour so that the lateral surface (41, 42) of the carrier plate is resiliently slidable by a certain distance in relation to the base area (29, 30) of the enclosing component part (Figure 1 to Figure 5).

8. A brake shoe as claimed in any one of the claims 1 to 6, **characterised** in that the junction point between the end areas and the base area has a dimensionally stable upset projection (60, 62 and 63, 64, respectively) which substantially is in alignment with the base area (65, 66) of the enclosing component part (Figure 11).

9. A brake shoe as claimed in any one of the claims 1 to 8, **characterised** in that at one of the end areas (25, 27 and 26, 28, respectively) of the enclosing component part at least one end portion (31 and 32, respectively) is provided which extends in the direction of the carrier plate (35) and takes resilient support thereon (Figure 5).

10. A brake shoe as claimed in claim 6 or any further of the preceding claims, **characterised** in that the enclosing component part (90, 91) is shaped from a sheet metal of more than 1 mm thickness (Figure 12).

11. A brake shoe as claimed in any one of the claims 1 to 10, **characterised** in that the end areas (92, 93 and 94, 95, respectively) of the enclosing component part (90, 92, 93, 96) are anchored with the carrier plate (98) by means of a rivet (97) or, respectively, a notched nail (96) penetrating it, or by a welding joint (99) (Figures 11, 12).

12. A brake shoe as claimed in any one of the claims 1 to 11,

**characterised** in that the enclosing component part is made of Nirosta sheet metal or any anodized aluminum sheet.

13. A brake shoe as claimed in any one of the claims 1 to 12,
**characterised** in that an enclosing component part is provided on each of the lateral surfaces (41, 42) of the carrier plate (35), and in that two identical end areas (3, 4) of the enclosing component parts are integrally united to form a cover component part (Figure 1, Figure 2) through an intermediate portion (2) which extends over the length of the sides of the carrier plate (35) (Figure 1 to Figure 5).

14. A brake shoe as claimed in any one of the claims 1 to 13,
**characterised** in that the metal coating (50) is formed integrally from the carrier plate (35) by way of chipless forming, preferably by embossing, casting or welding, in order to so provide a suitable abutment surface on the aperture wall (Figure 13, Figure 14).

15. A brake shoe as claimed in any one of the claims 1 to 14,
**characterised** in that the abutment surface of the brake shoe in the brake aperture is coated with any hard metal or ceramics.

**Revendications**

1. Plaquette de frein pour frein à disque à garnitures partielles, maintenue et guidée dans une cage de frein et pourvue d'une plaque de support (35) et d'une garniture de friction (34), dans laquelle un revêtement métallique est disposé au-dessus des surfaces latérales (41, 42) de la plaque de support (35) qui transmettent la force de frottement du frein à la paroi de la cage du boîtier, ce revêtement métallique venant en prise autour de ces parois latérales de la plaque de support (35) et étant solidaire de ces dernières, caractérisée en ce que le revêtement métallique (29, 30, Fig. 2) est conformé dans la zone des surfaces latérales (41, 42) de la plaque de support (35) de façon telle qu'il se présente un agrandissement, dépassant le double de l'épaisseur de la matière du revêtement métallique et suivant une direction perpendiculaire à la surface de freinage, de la surface d'appui de ce revêtement métallique sur les surfaces latérales de la paroi de la cage.

2. Plaquette de frein suivant la revendication 1, caractérisée en ce que le revêtement métallique est constitué par la zone de base (29,30, Fig. 2,5; 136, Fig. 10) d'une pièce d'entourage (3, 25, 27, 29, 31, Fig. 2) qui comporte une forme profilée pratiquement en U (25, 29, 27, Fig. 2; 135, 136, 111, Fig. 10) et qui entoure la zone (41, 42, Fig.5) de la plaque de support (35, 102) qui transmet la force de freinage par friction au boîtier de frein (48, Fig. 6), tandis que la zone de base (30, 136) se prolonge par une première et une seconde zones extrêmes (25, 27, Fig. 2 ou 111 et 135, Fig.10) de la pièce d'entourage qui constituent les ailes de la forme profilée en U et qui sont ancrées sur le côté avant, situé du côté de la garniture, ou sur le côté arrière (43, Fig. 6; 132, Fig. 9), situé du côté du piston, de la plaque de support (35, Fig. 4 et Fig. 5; 102, Fig. 9).

3. Plaquette de frein suivant l'une des revendications 1 et 2, caractérisée en ce que, sur l'une de ses zones extrêmes (3, 4, Fig. 1 et Fig. 2), la pièce d'entourage comporte une fenêtre (7, 8) qui est située dans l'alignement d'une ouverture de passage (39, 40, Fig. 3, Fig. 4) ménagé dans la plaque de support (35) et prévu pour recevoir une broche de guidage et en ce que, pour l'ancrage de la pièce d'entourage (1), une patte (9, 10) faisant saillie dans la fenêtre vient en prise dans cette ouverture de passage (39, 40) ménagé dans la plaque de support (35) (Fig. 1 à Fig. 4).

4. Plaquette de frein suivant l'une des revendications 1 et 3, caractérisé en ce que la plaque de support (102) comporte au moins un évidement (124 à 127) en forme de cuvette dans lequel s'enfonce une patte ou partie repoussée (112 à 115) partant d'une zone extrême (111) de la pièce d'entourage (111, 135, 136))Fig. 6 à Fig.10).

5. Plaquette de frein suivant la revendication 4, caractérisée en ce que l'évidement (124 à 127) en forme de cuvette est réalisé par façonnage sans contrainte, de préférence par emboutissage (figure 10).

6. Plaquette de frein suivant l'une des revendications 1 à 5, caractérisée en ce que, par ses surfaces latérales et par l'intermédiaire du revêtement métallique, elle prend appui sur les parois d'une cage (49) d'un étrier (48), de préférence en aluminium.

7. Plaquette de frein suivant l'une des revendications 1 à 6, caractérisée en ce que les emplacements de changement de direction (25 à 28) se présentant entre la zone de base (29 ou 30) et les zones extrêmes voisines (31, 3 ou 4, 32) de la pièce d'entourage ont un contour en forme de secteur circulaire, de sorte que les surfaces latérales (41, 42) de la plaque de support peuvent être déplacées élastiquement d'une certaine course vis-à-vis de cette zone de base (29, 30) de la pièce d'entourage (Fig. 1 à Fig. 5).

8. Plaquette de frein suivant l'une des revendications 1 à 6, caractérisée en ce que l'emplacement de changement de direction se présentant entre une zone extrême et la zone de base comporte une partie en saillie (60, 61 ou 61, 64) obtenue par repoussage et de forme stable, qui est pratiquement dans l'alignement de la zone de base (65, 66) de la pièce d'entourage (Fig. 11).

9. Plaquette de frein suivant l'une des revendications 1 à 8, caractérisée en ce qu'à l'une des zones extrêmes (25, 27 ou 26, 28) de la pièce d'entourage, il est prévu au moins une partie extrême (31 ou 32) qui, en s'étendant en direction de la pièce de support (35), prend appui élastiquement sur cette dernière (Fig. 5).

10. Plaquette de frein suivant la revendication 6 et une autre des revendications précédentes, caractérisée en ce que la pièce d'entourage (90, 91) est réalisée par façonnage d'une tôle d'épaisseur supérieure à 1 mm (Fig. 12).

11. Plaquette de Frein suivant l'une des revendications 1 à 10, caractérisée en ce que les zones extrêmes (92, 93 ou 94, 95) de la pièce d'entourage (90, 92, 93,96) sont ancrées sur la plaque de support (98) au moyen d'un rivet (97) ou d'un clou cannelé (96) traversant cette plaque de support (98) ou par soudage (99) (Fig. 11, 12).

12. Plaquette de frein suivant l'une des revendications 1 à 11, caractérisée en ce que la pièce d'entourage est formée d'une tôle inoxydable ou d'une tôle d'aluminium anodisée.

13. Plaquette de frein suivant l'une des revendications 1 à 12, caractérisée en ce qu'une pièce d'entourage est prévue sur chacune des surfaces latérales (41,42) de la plaque de support (35) et en ce que deux zones extrêmes (3, 4) des pièces d'entourage qui se correspondent l'une l'autre sont réunies entre elles, de façon à former une seule pièce constituant une pièce de recouvrement (Fig. 1, Fig. 2), par une section centrale (2) s'étendant sur toute la longueur des côtés de la plaque de support (35) (Fig.1 à Fig. 5).

14. Plaquette de frein suivant l'une des revendications 1 à 13, caractérisée en ce que le revêtement métallique (50) est réalisé d'une seule pièce à partir de la plaque de support (35), par déformation sans contrainte, de préférence par matage, par moulage ou par soudage, afin de permettre d'obtenir une surface d'appui appropriée sur la paroi de la cage (Fig. 13, Fig. 14).

15. Plaquette de frein suivant l'une des revendications 1 à 14, caractérisée en ce que la surface d'appui de cette plaquette de frein dans la cage de frein est revêtue de métal dur ou de céramique.

# FIG.1

# FIG.2

# FIG.3

# FIG.4

# FIG.5

FIG.6

FIG.7

FIG.8

FIG.9

FIG.10

**FIG.11**

**FIG.12**

**FIG.13**

**FIG.14**

# FIG. 15